# EUROPÄISCHE PATENTANMELDUNG

(11) **EP 0 630 585 A1**
(43) Veröffentlichungstag der Anmeldung: **28.12.1994**
(21) Anmeldenummer: 94107087.2
(22) Anmeldetag: 06.05.1994
(51) Int. Cl.: A24C 5/34

(54) **Verfahren und Vorrichtung zum Prüfen des Zugwiderstandes von Filterstäben**

(30) Priorität: 19.05.1993 DE 4316723
(71) Anmelder: Hauni Maschinenbau Aktiengesellschaft, D-21033 Hamburg (DE)
(72) Erfinder: Tobias, Jörg, D-21465 Wentorf (DE); Barkmann, Ralf, D-23560 Lübeck (DE)

(57) **Zusammenfassung**

Zum Prüfen des Zugwiderstands von Filterstäben ist ein Meßkopf (1) vorgesehen, der eine die zu prüfenden Filterstäbe (2) aufnehmende Meßkammer (4) aufweist. In der Meßkammer (4) ist eine die äußere Umhüllung des jeweils zu prüfenden Filterstabs (2) dichtumhüllende Manschette (6) angeordnet. Während ein Ende (17) der Meßkammer (4) zur Atmosphäre hin offen ist, wird an das andere Ende ein Druckbehälter (22) angeschlossen, der einen vom Umgebungsdruck verschiedenen Druck aufweist. Der zeitliche Verlauf der Druckänderung im Druckbehälter (22) wird mit einem Drucksensor (23) als Maß für den Zugwiderstand des Filterstabs (2) gemessen.

Dieses Vorgehen hat den Vorteil, daß der Zugwiderstand von Filterstäben oder anderen stabförmigen Artikeln der tabakverarbeitenden Industrie sehr zuverlässig, genau und reproduzierbar gemessen werden kann.

## Beschreibung

Die Erfindung betrifft ein Verfahren und eine Vorrichtung zum Messen des Zugwiderstandes von Filterstäben oder anderen stabförmigen Artikeln der tabakverarbeitenden Industrie.

Der Zugwiderstand ist ein wichtiges Qualitätskriterium von Zigaretten und anderen rauchbaren Artikeln, das vom Raucher unmittelbar wahrgenommen wird und seinen Eindruck vom Produkt entscheidend prägt. Der Zugwiderstand von Filterzigaretten wird ganz überwiegend vom Zugwiderstand des Filterabschnitts beeinflußt. Es ist daher für die Herstellung von in dieser Hinsicht qualitativ akzeptablen Produkten bzw. Artikeln von entscheidender Bedeutung, Filterabschnitte bzw. Filterstäbe mit definierten und möglichst konstantem Zugwiderstand zur Verfügung zu stellen. Es bestehen daher der Wunsch und das Bedürfnis, den Zugwiderstand von Filterstäben vor ihrer Weiterverarbeitung möglichst schon bei ihrer Herstellung zu messen, um gegebenenfalls noch in den Filterherstellungsprozeß im Sinne der Herstellung von Filterstäben mit konstanten Zugwiderständen eingreifen zu können.

Zum Prüfen des Zugwiderstandes von Filterzigaretten ist es durch die US-PS 3 258 117 bekannt, ein Ende der Zigarette in ein Anschlußstück zu schieben, in dem es von einem schlauchförmigen Dichtungsballon umfaßt und gegen die Atmosphäre abgedichtat wird. Über das Anschlußstück wird ein Unterdruck an das Zigaretteninnere gelegt, der eine Luftströmung mit vorgegebener Durchflußrate durch die Zigarette zieht. Der resultierende Unterdruck wird als Maß für den Zugwiderstand erfaßt. Da die Zigarette nur an ihrem Ende vom Dichtungsballon umgeben ist, beeinflussen die Luftdurchlässigkeit sowie Undichtigkeiten der Zigarettenhülle den Zugwiderstandsmeßwert und verfälschen ihn.

Das mag für Zigaretten akzeptabal und sogar wünschenswert sein. Für eine zuverlässige Prüfung des Zugwiderstandes von Filterstäben mehrfacher Gebrauchslänge ist dieses Vorgehen jedoch ungeeignet.

Eine andere Methode zum Prüfen des Zugwiderstandes von Zigaretten oder Filterstäben ist durch die DE 28 13 315 A1 bekannt. Hier ist für die Zugwiderstandsprüfung aller durchlaufenden Artikel ein Prüfförderer vorgesehen, auf dem jeder Aufnahmemulde axial fluchtend ein Prüfzylinder zugeordnet ist, in den der jeweilige Artikel zur Zugwiderstandsmessung eingestoßen wird. In jedem Prüfzylinder befindet sich eine dehnbare Membran, die sich eng um die Außenhülle der zu prüfenden Artikel herumlegt. Die Messung erfolgt durch Anlegen eines Unterdrucks an ein Artikelende und durch Messung des Drucks während eines Teils des Umlaufs des Förderers. Für die Messung steht nur eine sehr kurze Zeit zur Verfügung, so daß mit genauen Aussagen über den Zugwiderstand nicht zu rechnen ist. Den Anforderungen an eine Zugwiderstandsregelung auf einer modernen Maschine zum Herstellen von Filterstäben genügt diese bekannte Methode nicht.

Der Erfindung liegt die Aufgabe zugrunde, ein Verfahren und eine Vorrichtung zum Messen des Zugwiderstandes von Filterstäben oder anderen stabförmigen Artikeln der tabakverarbeitenden Industrie anzugeben, die auch hohen Anforderungen an die Eindeutigkeit, Genauigkeit und Reproduzierbarkeit genügen und die wirtschaftlich bei der Herstellung der Artikel zur Zugwiderstandsregelung eingesetzt werden können.

Bei einem Verfahren der eingangs angegebenen Art wird diese Aufgabe erfindungsgemäß dadurch gelöst, daß ein Artikel in einer Meßkammer positioniert und seine Umhüllung von außen abgedichtet wird, daß an ein Ende des Artikels ein vom Umgebungsdruck verschiedener Druck angelegt wird, daß ein durch den Artikel bewirkter Druckabfall gemessen wird und daß aus den Druckmeßwert ein den Zugwiderstand des Artikels repräsentierendes Prüfsignal erzeugt wird. In bevorzugter Weiterbildung der Erfindung wird dazu an ein Artikelende ein bestimmter Anfangsdruck angelegt und eine entsprechende Luftströmung durch den Artikel hindurch in Gang gesetzt. Nacheinander werden wenigstens zwei Druckmessungen vorgenommen und entsprechende Meßsignale gebildet. Die Meßsignale werden zu einem den Zugwiderstand repräsentierenden Prüfsignal verarbeitet. In bevorzugter Weise ist vorgesehen, daß in einem Druckvolumen ein vom Umgebungsdruck verschiedener Anfangsdruck aufgebaut wird, daß das Druckvolumen mit einem Ende der Meßkammer verbunden und der Anfangsdruck durch den darin positionierten Artikel hindurch abgebaut wird , daß nacheinander wenigstens zwei Druckmessungen vorgenommen und entsprechende Meßsignale gebildet werden, daß aus der zeitlichen Aufeinanderfolge und der Größe der Meßsignale der zeitliche Verlauf der Änderung des Anfangsdrucks ermittelt wird und daß aus dem zeitlichen Verlauf der Druckänderung der Zugwiderstand des Artikels bestimmt und ein entsprechendes Prüfsignal erzeugt wird. Durch die Erfindung wird also ein neues Verfahren zum Bestimmen des Zugwiderstandes von Zigaretten oder Filterstäben angegeben, bei dem ein in einer Druckkammer aufgebauter Druck durch den Artikel hindurch abgebaut wird, nachdem die Verbindung des Druckbehälters zur Druckquelle unterbrochen worden ist. Die zeitliche Veränderung des Drucks in dem Druckbehälter hängt nur vom Zugwiderstand des Artikels in der angeschlossenen Meßkammer ab. Durch Erfassen der zeitlichen Veränderung des Drucks in der Druckkammer ist also eine eindeutige und sehr genaue Messung des Zugwiderstandes des in der Meßkammer befindlichen Artikels möglich.

Eine Weiterbildung bzw. Variante des Verfahrens nach der Erfindung besteht darin, daß in einem mit einem Ende der Meßkammer verbundenen Druckvolumen ein vom Umgebungsdruck verschiedener Anfangsdruck erzeugt wird, daß das Druckvolumen zur Meßkammer hin geöffnet und dadurch eine den Anfangsdruck in Abhängigkeit vom Zugwiderstand verändernde Luftströmung durch den Artikel hindurch bewirkt wird, daß mindestens drei verschiedene Druckwerte vorgegeben werden, die zwischen dem Anfangsdruck und dem Umgebungsdruck liegen, daß fortlaufend der im Druckvolumen vorhandene Restdruck gemessen und jeweils entsprechende Restdrucksignale erzeugt werden, daß die Zeitspannen erfaßt werden, die beim Abfallen des Drucks von den vorgegebenennen Druckwerten zum jeweils nächsten vergehen, daß aus der zeitlichen Aufeinanderfolge des Überschreitens der vorgegebenen Druckwerte der zeitliche Verlauf der Druckänderung im Druckbehälter bestimmt wird und daß aus dem zeitlichen Verlauf der Druckänderung ein den Zugwiderstand des Artikels repräsentierendes Prüfsignal erzeugt wird.

Gemäß der Erfindung wird in Abhängigkeit von den Prüfsignalen die Herstellung der Artikel im Sinne der Konstanthaltung des Zugwiderstandes beeinflußt. Damit ergibt sich eine zuverlässige Zugwiderstandsregelung bei der Herstellung der Artikel.

In weiterer Fortsetzung der Erfindung ist vorgesehen, daß aus einem Strom aufeinanderfolgend geförderter Artikel einzelne Artikel entnommen und zur Prüfung ihres Zugwiderstands in die Meßkammer eingeführt werden. Dieser Vorschlag bezieht sich insbesondere auf die Herstellung von Filterstäben. Er beruht auf der Erkenntnis, daß es nicht erforderlich ist, den Zugwiderstand aller aufeinanderfolgender Filterstäbe in der Fertigung zu prüfen, weil bei der Filterherstellung nur sehr geringe und in der Regel langsame Zugwiderstandsänderungen zwischen aufeinanderfolgenden Filterstäben auftreten. Es genügt daher, wie vorgeschlagen, dem laufenden Produktionsprozeß in vorgegebenen Zeitabständen jeweils einen Filterstab zu entnehmen und seinen Zugwiderstand zu messen, um zuverlässig auf den Zugwiderstand aller Filterstäbe schließen zu können.

Eine weitere Fortsetzung der Erfindung sieht vor, daß die Umhüllung des in der Meßkammer positionierten Artikels durch flächiges Anlegen einer luftundurchlässigen, schlauchartigen Manschette nach außen abgedichtet wird, daß zwischen der dem Artikel abgewandten Seite der Manschette und der Innenwand eines die Manschette haltenden Meßkopfgehäuses ein Gasraum mit einem ersten und einem zu diesem axial versetzten zweiten Gasanschluß gebildet wird, daß an einen Gasanschluß ein vom Umgebungsdruck verschiedener Druck angelegt wird, so daß zwischen diesem und dem anderen Anschluß eine Gasströmung erzeugt wird, daß der sich infolge der Gasströmung einstellende Druck gemessen und ein entsprechendes Drucksignal gebildet wird und daß das Drucksignal zu einem den Artikeldurchmesser repräsentierenden Durchmessersignal verarbeitet wird. Das Verfahren nach der Erfindung bietet als neben der Zugwiderstandsmessung auch die Möglichkeit der Prüfung des Artikeldurchmessers. Diese ist wegen der die Artikelhülle abdichtenden Manschette besonders wertvoll bei Artikeln, deren Umhüllung porös oder zum Zwecke der Ventilation perforiert ist.

Geprüfte und als ordnungsgemäß eingestufte Artikel werden gemäß der Erfindung in den Fertigungsprozeß zurückgeführt. Sie gehen der Produktion daher nicht verloren.

Bei einer Vorrichtung der eingangs angegebenen Art wird die Aufgabe erfindungsgemäß dadurch gelöst, daß diese Vorrichtung eine Meßkammer mit Mitteln zum Positionieren und Halten eines zu prüfenden Artikels in einer Meßposition, Mittel zum Abdichten der Außenhülle des positionierten Artikels, Mittel zum Anlegen eines vom Umgebungsdruck verschiedenen Drucks an ein Ende des positionierten Artikels, während sein anderes Ende zur Umgebung offen ist, Mittel zum Erfassen eines Druckabfalls durch den Artikel und zum Erzeugen eines entsprechenden Drucksignals und eine Auswertanordnung zum Verarbeiten des Drucksignals zu einem den Zugwiderstand repräsentierenden Prüfsignal aufweist.

Weiterbildungen und vorteilhafte Ausgestaltungen der Vorrichtung nach der Erfindung sind in den Unteransprüchen 10 bis 17 enthalten. Die Ansprüche 10 und 11 betreffen die Ausgestaltung der Vorrichtung für das Messen des Zugwiderstands der Artikel. Anspruch 12 betrifft die Ausbildung der Meßkammer für das Prüfen des Zugwiderstandes und des Artikeldurchmessers. Anspruch 13 bezieht sich auf eine bevorzugte Anordnung zum Messen des Artikeldurchmessers. Die Ansprüche 14 bis 17 betreffen weitere Ausgestaltungen der Vorrichtung nach der Erfindung.

Die Erfindung bietet den Vorteil einer sehr genauen Zugwiderstandsmessung mit hoher Reproduzierbarkeit. Dadurch ist es möglich, den Herstellungsprozeß von Filterstäben oder anderen stabförmigen Artikeln der tabakverarbeitenden Industrie exakt auf konstanten Zugwiderstand der Artikel zu regeln. Apparativ ist die Vorrichtung für die Messung des Zugwiderstandes wenig aufwendig, da eine bisher übliche aufwendige Strömungsmessung entfällt. Zusätzlich kann auf einfache Weise ein genauer Durchmessermeßwert gewonnen werden, wobei sich die Erfindung insoweit besonders bei Artikeln mit poröser oder perforierter Umhüllung bewährt.

Die Erfindung wird nun anhand der Zeichnung näher erläutert.

Es zeigen;
- Figur 1: eine Prinzipdarstellung der Vorrichtung,
- Figur 2: eine schematische Teilansicht einer Entnahmeeinrichtung,
- Figur 3: eine schematische Draufsicht auf die Einrichtung nach Figur 2 und
- Figur 4: ein Druck-Zeit-Diagramm zur Veranschaulichung des Verfahrens nach der Erfindung.

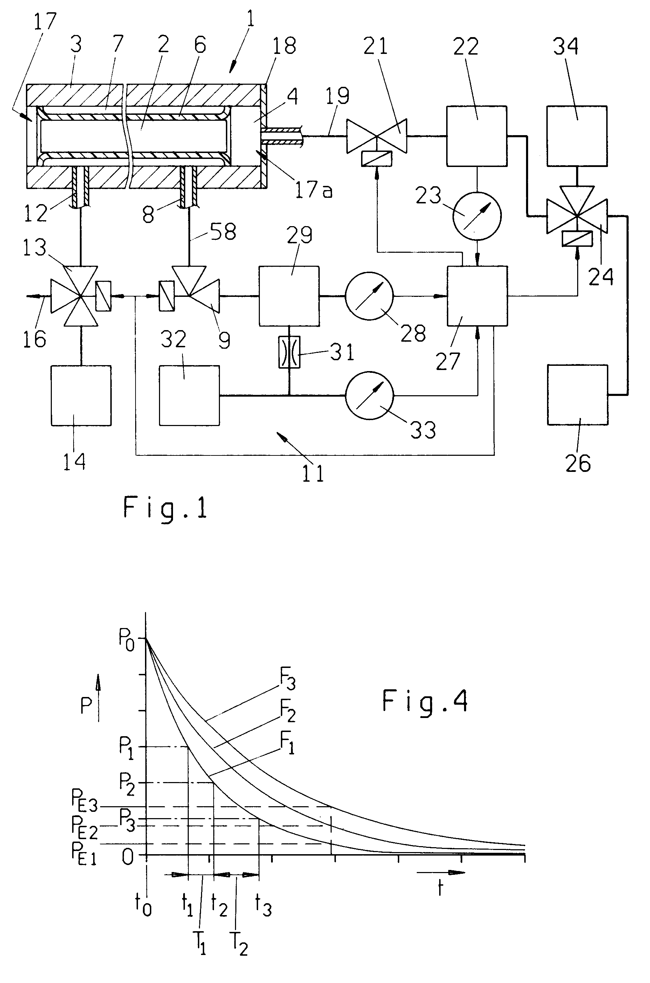

Figur 1 zeigt eine schematische Darstellung einer Vorrichtung nach der Erfindung zum Messen des Zugwiderstandes von Filterstäben oder anderen stabförmigen Artikeln der tabakverarbeitenden Industrie. Wesentliche Bestandteile der Anordnung sind als Blöcke dargestellt. Mit dicken Linien sind die pneumatischen, mit dünnen Linien die elektrischen Verbindungen eingezeichnet. Das gilt auch für die Darstellung in den anderen Figuren.

In Figur 1 ist ein Meßkopf 1 zum Prüfen des Zugwiderstandes eines Filterstabes 2 im Schnitt gezeigt. Der Meßkopf 1 weist ein Meßkopfgehäuse 3 mit einer im wesentlichen kreiszylindrischen Kammer 4 auf. In die Meßkammer 4 ist eine schlauchartige Manschette 6 eingesetzt, deren axiale Länge etwa gleich der Länge der zu prüfenden Filterstäbe 2 ist. Der Durchmesser der Manschette 6 ist in ihrem entspannten Zustand etwas kleiner als der Durchmesser der zu prüfenden Artikel, so daß sie sich lückenlos und faltenfrei eng um die äußere Umhüllung der zu prüfenden Artikel herumlegt. Die Manschette 6 ist an ihren beiden Enden fest und dicht mit der Innenwand der Meßkammer 4 verbunden, so daß zwischen der Innenwand der Meßkammer 4 und der Manschette 6 ein Gasraum 7 gebildet wird. Dieser Gasraum 7 ist über einen ersten Anschluß 8 und ein Ventil 9 mit einer Gaszuführeinrichtung 11 sowie über einen zweiten Anschluß 12 und ein Ventil 13 mit einer Unterdruckeinrichtung 14 verbunden. Die Unterdruckeinrichtung 14 dient bei geschlossenem Ventil 9 und geöffneten Ventil 13 dazu, durch Absaugen von Luft aus dem Gasraum 7 die Manschette 6 aufzuweiten, so daß ein Filterstab eingelegt oder entnommen werden kann. Durch Umschalten des Ventils 13 wird der Gasraum 7 über einen Anschluß 16 gelüftet, so daß sich die Manschette 6 entspannt und fest und dicht um den in die Meßkammer 4 eingebrachten Filterstab 2 herumlegt.

Ein Ende 17 der Meßkammer 4 ist zur Atmosphäre hin offen. Das andere Meßkammerende 17a ist durch einen Deckel 18 luftdicht verschlossen. Durch den Meßkammerdeckel 18 hindurch führt eine Luftanschlußleitung 19, die das Meßkammerende 17a über ein erstes Ventil 21 an einen Druckbehälter 22 mit einem Drucksensor 23 anschließt, der seinerseits über ein zweites Ventil 24 mit einer Unterdruckquelle verbunden ist. Als Unterdruckquelle kann die Saugseite einer Pumpe 26 vorgesehen sein.

Der Drucksensor 23 des Druckbehälters 22 ist an eine Auswert- und Steueranordnung 27 angeschlossen, die ausgangsseitig mit Betätigungsorganen der Ventile 21 und 24 verbunden ist. Außer den Ventilen 21 und 24 sind auch die Betätigungsorgane der Ventile 9 und 13 an die Auswert- und Steueranordnung 27 angeschlossen.

Die Gas- bzw. Luftzuführeinrichtung 11 weist einen mit einem Drucksensor 28 versehenen Vordruckbehälter 29 auf. Dieser Vordruckbehälter 29 ist über eine Drossel 31 mit einer Überdruckquelle 32 verbunden, bei der es sich um die Druckseite der Pumpe 26 handeln kann. Der Druck der Druckquelle 32 wird stromauf der Drossel 31 mit einem Drucksensor 33 erfaßt, der ebenso wie der Drucksensor 28 mit der Auswert- und Steueranrodnung 27 verbunden ist, und konstant geregelt.

Zum Einbringen und Positionieren eines Filterstabes in der Meßkammer 4 wird die Manschette 6 durch Anlegen eines Unterdrucks an den Gasraum 7 zunächst aufgeweitet, so daß sich der Filterstab 2 bequem einführen läßt. Dazu ist das Ventil 9 geschlossen, während das Ventil 13 die Verbindung zur Unterdruckquelle 14 öffnet. Als Unterdruckquelle 14 kann wieder, was hier nicht dargestellt ist, die Saugseite der Pumpe 26 dienen, die über entsprechende Leitungen und Ventile angeschlossen ist. Zum exakten Positionieren des Filterstabs 2 in der Meßkammer 4 sind Anschlagmittel vorgesehen, die in der Zeichnung ebenfalls nicht dargestellt sind. Ebenso ist ein nicht dargestelltes Fühlorgan vorgesehen, welches die Anwesenheit eines Filterstabs in der richtigen Position feststellt. Durch Umschalten des Ventils 13 wird der Gasraum 7 über den Anschluß 16 gelüftet, so daß sich die Manschette 6 entspannt und dicht um die Außenhülle des Filterstabs 2 herumlegt.
Sodann oder gleichzeitig wird bei geschlossenem Ventil 21 über das geöffnete Ventil 24 aus der Unterdruckquelle 26 ein Unterdruck im Druckbehälter 22 aufgebaut. Ist ein vorgegebener Unterdruck erreicht, wird dieser durch Schließen des Ventils 24 und Öffnen des Ventils 21 als Anfangsdruck P₀ (vergl. Figur 4) an die Meßkammer 4 gelegt. Dadurch wird vom offenen Ende 17 der Meßkammer her Luft durch den Filterstab in den Druckbehälter 22 gesaugt, dessen Unterdruck dadurch abgebaut wird. Der zeitliche Verlauf der durch die einströmende Luft im Druckbehälter 22 bewirkten Druckänderung, der nur vom Zugwiderstand des in der Meßkammer 4 positionierten Filterstabs 2 abhängig ist, ist für drei verschiedene Filter in Figur 4 dargestellt und dort mit F1, F2 und F3 bezeichnet. In dem Diagramm ist der Druck P in dem Druckvolumen 22 gegen die Zeit t vom Öffnen des Ventils 21 im Zeitpunkt t₀ an aufgetragen.
Durch mehrere zeitlich aufeinanderfolgende Druckmessungen mit dem Drucksensor 23 wird der Druckverlauf im Druckvolumen 22 erfaßt und von der Auswert- und Steuerenordnung analysiert. Aus der zeitlichen Aufeinanderfolge der Druckmessungen des Drucksensors 23 sowie aus der Größe der jeweiligen Druckmeßwerte wird der zeitliche Verlauf der Druckänderung im Druckbehälter 22 ermittelt. Aus diesem zeitlichen Verlauf der Druckänderung berechnet die Auswert- und Steueranordnung 27 den Zugwiderstand des Filterstabs 2 in der Meßkammer 4.
Dazu wird folgendermaßen vorgegangen.
Sobald in der Meßkammer 4, wie oben beschrieben, ein erster Filterstab positioniert und im Druckvolumen 22 der vorgegebene Unterdruck (Anfangsdruck P₀) aufgebaut ist, wird das Ventil 24 geschlossen und das Ventil 21 geöffnet. Jetzt strömt durch den Filterstab 2 eine Luftströmung, die allein vom Zugwiderstand des Filterstabs abhängt und eine charakteristische exponentielle Abnahme des Unterdrucks bewirkt. Der zeitliche Verlauf der Unterdruckabnahme ist als Kurve F1 in Figur 4 dargestellt. Er ergibt sich aus dem Anfangsdruck P₀ und aus einem im Druckvolumen zum vorgegebenen Zeitpunkt t_{E} bestehenden Restdruck P_{E1}. Aus der Zeitkonstanten des Kurvenverlaufs F1 wird mit Hilfe der Auswert- und Steueranordnung 27 der Zugwiderstand des ersten Filterstabs berechnet und als entsprechendes Prüfsignal zur Verfügung gestellt. Auf gleiche Weise wird mit den folgenden Filterstäbe verfahren. Der Zugwiderstand des zweiten Filterstabs drückt sich im Kurvenverlauf F2 aus, der im Zeitpunkt t_{E} den Restdruck P_{E2} aufweist. Der Kurvenverlauf F2 der Unterdruckabnahme über den zweiten Filterstab zeigt, daß sich dieser Zugwiderstand von dem des ersten und auch von den des dritten unterscheidet, der durch den Kurvenverlauf F3 und den Restdruck P_{E3} zum Zeitpunkt t_{E} repräsentiert ist. Durch Ermitteln des Druckverlaufs in dem Druckvolumen 22 in einem vorgegebenen festen Zeitraum, der im vorliegenden Beispiel bei allen Messungen bei t₀, dem Zeitpunkt des Öffnens des Ventils 21, beginnt und bei t_{E} endet, läßt sich so auf einfache Weise der Zugwiderstand der Filterstäbe bestimmen. Dabei muß t₀ nicht mit dem Öffnen des Ventils 21 zusammenfallen, die Meßzeit t₀ - t_{E} kann vielmehr auch nach dem Öffnen des Ventils 21 beginnen, wobei als Anfangsdruck P₀ dann allerdings der zu diesem Zeitpunkt im Druckvolumen 22 herrschende Druck zu berücksichtigen ist. Neben dieser Methode, bei der der zeitliche Verlauf der Druckänderung im Druckvolumen 22 durch Messen des Drucks am Anfang t₀ und am Ende t_{E} einer konstanden Meßzeit bestimmt wird, umfaßt das Verfahren nach der Erfindung auch die folgende Variante, bei der die Zeit gemessen wird, die der Druck zum Abfallen auf vorgegebene konstante Druckwerte P₁, P₂ und P₃ benötigt. Für einen ersten Filterstab wird das anhand der Kurve F1 in Figur 4 näher erläutert. In diesem Fall sind drei konstante Druckwerte P₁, P₂ und P₃ vorgegeben. Fällt nun der Unterdruck nach dem Öffnen des Ventils 21 vom Anfangsdruck P₀ ab, so erreicht er im Zeitpunkt t₁ den ersten vorgegebenen Druckwert P₁, im Zeitpunkt t₂ den zweiten Druckwert P₂ und im Zeitpunkt t₃ den dritten Druckwert P₃. Die Zeit T₁ zwischen t₁ und t₂ und die Zeit T₂ zwischen t₂ und t₃ werden gemessen. Aus diesen Zeiten und den vorgegebenen Druckwerten ergibt sich wieder der exponentielle zeitliche Verlauf F1 der Druckänderung, aus dem der Zugwiderstand des Filterstabs bestimmt wird.

Auf diese Weise ergibt sich eine sehr präzise Aussage über den Zugwiderstand der geprüften Artikel. Die Auswert- und Steueranordnung 27 erzeugt in Abhängigkeit von diesem Zugwiderstand Prüfsignale, die für eine Zugwiderstandsregelung der Filterstabherstellung genutzt werden können. Filterstäbe mit unakzeptablem Zugwiderstand können aufgrund der Messung ausgeschleust werden. Akzeptable Filterstäbe werden in den Fertigungsprozeß zurückgeführt.

Der dargestellte Meßkopf 2 eignet sich in hervorragender Weise auch für die Messung des Durchmessers eines in der Meßkammer 4 positionierten Filterstabes 2. Dazu wird mittels der Druckquelle 32 ein konstanter Überdruck erzeugt und mit dem Drucksensor 33 überwacht, der über die Drossel 31 an den Vordruckbehälter 29 angelegt wird. Wird nun bei zur Atmosphäre hin offenem Ventil 13 das Ventil 9 geöffnet, so entsteht in dem Gasraum 7 eine Luftströmung, deren Größe direkt von dem Durchmesser des eingespannten Filterstabs 2 abhängig ist. Diese Luftströmung ist bestimmend für den Druck in dem Vordruckbehälter 29, der mit dem Drucksensor 28 erfaßt wird, der ein entsprechendes Meßsignal erzeugt und an die Auswert- und Steueranordnung abgibt. Die Auswert- und Steueranordnung verarbeitet dieses Meßsignal zu einem den Durchmesser des Filterstabs 2 repräsentierenden Durchmessersignal.

Als Ventil 24 kann ein Zweiwegeventil eingesetzt werden, das die Saugseite der als Unterdruckquelle vorgesehenen Pumpe 26 einerseits mit dem Druckbehälter 22 und andererseits entweder mit der Atmosphäre oder einer zweiten Meßvorrichtung 34 für die Zugwiderstandsmessung verbindet. Im letzteren Fall wird der Druckbehälter der zweiten Meßvorrichtung 34 von der Unterdruckquelle 26 auf einen Unterdruck gebracht, während im Meßkopf 1 die Zugwiderstandsprüfung am Filterstab 2 stattfindet.

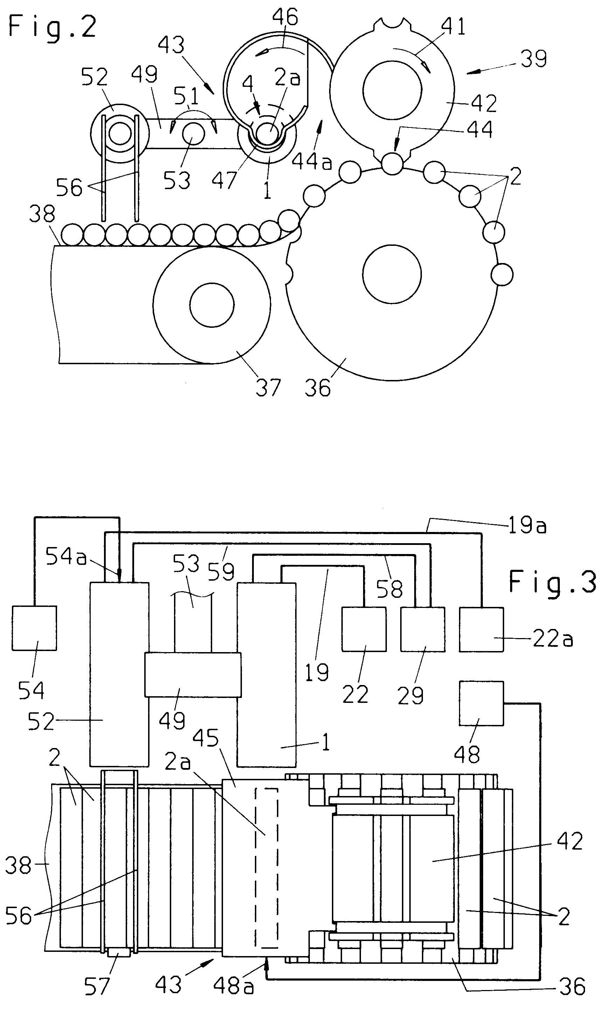

Die Figuren 2 und 3 zeigen die Anordnung zweier Prüfköpfe für die Messung des Zugwiderstandes in einer Maschine zur Herstellung von Filterstäben, von der nur die letzte Fördertrommel 36 und ein um eine Umlenkrolle 37 geführtes Ablegerband 38 dargestellt sind. Der letzten Fördertrommel 36 ist ein Überführungsmittel 39 zugeordnet, welches einen achsparallel zur letzten Fördertrommel 36 in Pfeilrichtung 41 umlaufenden Entnahneförderer 42 sowie eine Zwischenablage 43 aufweist. Am Umfang des Entnahmeförderers 42 ist eine achsparallele Aufnahme 44 vorgesehen, die jeweils einen Artikel 2 aus der Reihe der von der Fördertrommel 36 geförderten Artikel aufnimmt. Nach einer Viertelumdrehung in Pfeilrichtung 41 gibt der Entnahmeförderer 42 den Artikel 2 an einen Leitschirm 45 der Zwischenablage 43 ab, an dem entlang der Artikel in Pfeilrichtung 46 in eine axial mit der Meßkammer 4 des Meßkopfes 1 fluchtende Einstoßmulde 47 gelangt. Aus seiner Einstoßposition 2a in der Einstoßmulde 47 wird der Filterstab mittels eines Blasluftstoßes aus einer mit einer Druckquelle 48 verbundenen Blasdüse 48a längsaxial in die Meßkammer 4 des Meßkopfes eingestoßen (vergl. Figur 3), während die Manschette 6 in der oben im Zusammenhang mit Figur 1 beschriebenen Art und Weise aufgeweitet ist.

Der Meßkopf 1 ist an einem Schwenkarm 49 angebracht, der den Meßkopf 1 aus seiner in Figur 2 gezeigten Einstoßposition in eine Meßposition und zurückschwenkt. Am entgegengesetzten Ende tragt der Schwenkarm 49 einen zweiten Meßkopf 52, der ebenso aufgebaut ist wie der erste Meßkopf 1 und der abwechselnd mit diesem Filterstäbe zur Zugwiderstandsmessung aufnimmt. Der zweite Meßkopf 52 gehört zu der in Figur 1 angedeuteten zweiten Meßvorrichtung 34. Der Schwenkarm 49 ist um eine zu den Achsen der Trommel 36 und des Entnahmeförderers 42 parallele Achse 53 schwenkbar.

Während in die Meßkammer 4 des Meßkopfes 1 ein Artikel 2 eingestoßen wird (Figur 3), findet im Meßkopf 52 die oben beschriebene Zugwiderstandsmessung statt. Nach der Messung wird der geprüfte Filterstab mittels eines Blasluftstoßes aus einer mit einer Druckquelle 54 verbundenen Blasdüse 54a (Figur 3) aus dem Meßkopf 52 ausgestoßen und in den Strom der Filterstäbe auf dem Ablegerband 38 zurückgeführt. Um eine geordnete Ablage des ausgestoßenen Filterstabes auf dem Ablegerband 38 zu gewährleisten, sind Leitbleche 56 und ein Anschlag 57 vorgesehen, die einen den Filterstab führenden, auf dem Ablegerband 38 mündenden Fallschacht bilden. Auf diese Weise ist gewährleistet, daß die Zugwiderstandsmessung nicht zu unnötigen Ausschuß führt.

In Figur 3 sind noch einmal einige der verschiedenen Druckquellen angedeutet, die über flexible Schlauchleitungen 19, 19a, 58, 59 mit den beweglichen Prüfköpfen verbunden sind.

Das Verfahren nach der Erfindung macht sich die Erkenntnis zunutze, daß es nicht erforderlich ist, den Zugwiderstand eines jeden einzelnen Filterstabes zu messen, um eine zuverlässige Aussage über den Zugwiderstand aller Filterstäbe zu gewinnen. Erfahrungsgemäß verändern sich der Zugwiderstand und die Dichte der Filterstäbe bei der Filterherstellung nur sehr langsam, so daß plötzliche Zugwiderstandssprünge nicht zu erwarten sind.

Zugwiderstandsänderungen können daher auch dann erfaßt werden wenn bei einer hochproduktiven Herstellungsmaschine nur etwa ein Prozent der Filterstäbe gepüft werden. Dadurch steht für jede einzelne Zugwiderstandsmessung ausreichend Zeit zur Verfügung, um zu sehr präzisen und zuverlässigen Meßergebnissen zu kommen. Die aufgrund dieser Zugwiderstandsmessung gewonnenen Prüfsignale können zur Anzeige des Zugwiderstandes und/oder zur Regelung der Filterstabherstellung auf konstanten Zugwiderstand genutzt werden.

Es sei darauf hingewiesen, daß die Druckverhältnisse bei der Zugwiderstands- und Durchmessermessung auch umgekehrt werden können. So kann im Druckbehälter 22 anstelle eines Unterdrucks ein Überdruck erzeugt werden, der sich für die Zugwiderstandsmessung über den Filterstab 2 abbaut. Der Meßvorgang ist derselbe wie oben beschrieben. Im Vordruckbehälter 29 kann für die Durchmessermessung ein Unterdruck hergestellt werden, ohne daß der Meßvorgang geändert wird.

## Patentansprüche

1. Verfahren zum Messen des Zugwiderstands von Filterstäben oder anderen stabförmigen Artikeln der tabakverarbeitenden Industrie, dadurch gekennzeichnet, daß ein Artikel in einer Meßkammer positioniert und seine Umhüllung von außen abgedichtet wird, daß an ein Ende des Artikels ein vom Umgebungsdruck verschiedener Druck angelegt wird, daß ein durch den Artikel bewirkter Druckabfall gemessen wird und daß aus dem Druckmeßwert ein den Zugwiderstand des Artikels repräsentierendes Prüfsignal erzeugt wird.

2. Verfahren nach Anspruch 1, dadurch gekennzeichnet, daß an ein Artikelende ein bestimmter Anfangsdruck angelegt und eine entsprechende Luftströmung durch den Artikel hindurch in Gang gesetzt wird, daß nacheinander wenigstens zwei Druckmessungen vorgenommen und entsprechende Meßsignale gebildet werden und daß die Meßsignale zu einem den Zugwiderstand repräsentierenden Prüfsignal verarbeitet werden.

3. Verfahren nach Anspruch 2, dadurch gekennzeichnet, daß in einem Druckvolumen ein vom Umgebungsdruck verschiedener Anfangsdruck aufgebaut wird, daß das Druckvolumen mit einem Ende der Meßkammer verbunden und der Anfangsdruck durch den darin positionierten Artikel hindurch abgebaut wird, daß nacheinander wenigstens zwei Druckmessungen vorgenommen und entsprechende Meßsignale gebildet werden, daß aus der zeitlichen Aufeinanderfolge und der Größe der Meßsignale der zeitliche Verlauf der Änderung des Anfangsdrucks ermittelt wird und daß aus dem zeitlichen Verlauf der Druckänderung der Zugwiderstand des Artikels bestimmt und ein entsprechendes Prüfsignal erzeugt wird.

4. Verfahren nach Anspruch 2 oder 3, dadurch gekennzeichnet, daß in einem mit einem Ende der Meßkammer verbundenen Druckvolumen ein vom Umgebungsdruck verschiedener Anfangsdruck erzeugt wird, daß das Druckvolumen zur Meßkammer hin geöffnet und dadurch eine den Anfangsdruck in Abhangigkeit vom Zugwiderstand verändernde Luftströmung durch den Artikel hindurch bewirkt wird, daß mindestens drei verschiedene Druckwerte vorgegeben werden, die zwischen dem Anfangsdruck und dem Umgebungsdruck liegen, daß fortlaufend der im Druckvolumen vorhandene Restdruck gemessen und jeweils entsprechende Restdrucksignale erzeugt werden, daß die Zeitspannen erfaßt werden, die beim Abfallen des Drucks von den vorgegebenen Druckwerten zum jeweils nächsten vergehen, daß aus der zeitlichen Aufeinanderfolge des Überschreitens der vorgegebenen Druckwerte der zeitliche Verlauf der Druckänderung im Druckbehälter bestimmt wird und daß aus dem zeitlichen Verlauf der Druckänderung ein den Zugwiderstand des Artikels repräsentierendes Prüfsignal erzeugt wird.

5. Verfahren nach einem der Ansprüche 1 bis 4, dadurch gekennzeichnet, daß in Abhängigkeit von den Prüfsignalen die Herstellung der Artikel im Sinne der Konstanthaltung des Zugwiderstandes beeinflußt wird.

6. Verfahren nach einem der Ansprüche 1 bis 5, dadurch gekennzeichnet, daß aus einem Strom aufeinanderfolgend geförderter Artikel einzelne Artikel entnommen und zur Prüfung ihres Zugwiderstands in die Meßkammer eingeführt werden.

7. Verfahren nach einem der Ansprüche 1 bis 6, dadurch gekennzeichnet, daß die Umhüllung des in der Meßkammer positionierten Artikels durch flächiges Anlegen einer luftundurchlässigen schlauchartigen Manschette nach außen abgedichtet wird, daß zwischen der dem Artikel abgewandten Seite der Manschette und der Innenwand eines die Manschette haltenden Meßkopfgehäuses ein Gasraum mit einem ersten und einem zu diesem axial versetzten zweiten Gasanschluß gebildet wird, daß an einen Gasanschluß ein vom Umgebungsdruck verschiedener Druck angelegt wird, so daß zwischen diesem und dem anderen Anschluß eine Gasströmung erzeugt wird, daß der sich infolge der Gasströmung einstellende Druck gemessen und ein entsprechendes Drucksignal gebildet wird und daß das Drucksignal zu einem den Artikeldurchmesser repräsentierenden Durchmessersignal verarbeitet wird.

8. Verfahren nach einem der Ansprüche 1 bis 7, dadurch gekennzeichnet, daß geprüfte ordnungsgemäße Artikel in den Fertigungsprozeß zurückgeführt werden.

9. Vorrichtung zum Messen des Zugwiderstandes von Filterstäben oder anderen stabförmigen Artikeln der tabakverarbeitenden Industrie, dadurch gekennzeichnet, daß sie eine Meßkammer (4) mit Mitteln (6, 7) zum Positionieren und Halten eines zu prüfenden Artikels (2) in einer Meßposition, Mittel (6) zum Abdichten der Außenhülle des positionierten Artikels, Mittel (22, 26) zum Anlegen eines vom Umgebungsdruck verschiedenen Drucks an ein Ende (17a) des positionierten Artikels, während sein anderes Ende (17) zur Umgebung offen ist, Mittel (23) zum Erfassen eines Druckabfalls durch den Artikel und zum Erzeugen eines entsprechenden Drucksignals und eine Auswertanordnung (27) zum Verarbeiten des Drucksignals zu einem den Zugwiderstand des Artikels repräsentierenden Prüfsignal aufweist.

10. Vorrichtung nach Anspruch 9, dadurch gekennzeichnet, daß ein Ende (17a) der Meßkammer (4) über ein erstes Ventil (21) an einen Druckbehälter (22) angeschlossen ist, daß der Druckbehälter über ein zweites Ventil (24) mit einer Druckquelle (26) verbunden ist und daß der Druckbehälter ein an eine Auswert- und Steueranordnung (27) angeschlossenes Druckmeßmittel (23) aufweist.

11. Vorrichtung nach Anspruch 10, dadurch gekennzeichnet, daß die Auswert- und Steueranordnung (27) so ausgebildet ist, daß sie bei geschlossenem ersten Ventil (21) das Ventil (24) zur Druckquelle (26) hin öffnet, nach dem Aufbau eines Anfangsdrucks P₀ im Druckbehälter (22) das zweite Ventil (24) schließt und bei geschlossenem zweiten Ventil das erste Ventil (21) zur Meßkammer (4) hin öffnet, am Druckmeßmittel (23) wenigstens zweimal hintereinander einen dem jeweiligen Druck P im Druckbehälter (22) entsprechenden Meßwert abgreift und speichert, aus den Meßwerten sowie ihrer zeitlichen Aufeinanderfolge den zeitlichen Verlauf (F1, F2, F3) der Druckänderung im Druckbehälter bestimmt und aus diesem Verlauf der Druckänderung ein den Zugwiderstand des Artikels (2) in der Meßkammer (4) repräsentierendes Prüfsignal erzeugt.

12. Vorrichtung nach einem der Ansprüche 9 bis 11, dadurch gekennzeichnet, daß die Meßkammer (4) von einer aus einem dehnbaren Schlauchstück bestehenden Manschette (6) umgeben ist, deren Länge etwa der Länge der Artikel (2) gleich ist und deren Innenwand sich dicht an die Umhüllung eines positionierten Artikels (2) anlegt, daß das Schlauchstück an seinen Enden in eine Aufnahme eines Meßkopfgehäuses (3) eingespannt ist, so daß zwischen dem Schlauchstück und der Innenwand des Meßkopfgehäuses ein Gasraum (7) gebildet ist, und daß der Gasraum einen Gaseinlaß (8) und einen dazu axial versetzten Gasauslaß (12) aufweist.

13. Vorrichtung nach Anspruch 12, dadurch gekennzeichnet, daß der Einlaß (8) des Gasraums (7) zum Messen eines Artikeldurchmessers an einen mit einer Druckquelle (32) verbundenen Vordruckbehälter (29) angeschlossen und der Auslaß (12) zur Atmosphäre hin offen ist, daß dem Vordruckbehälter ein Druckmeßmittel (28) zugeordnet ist und das Druckmeßmittel ein dem Artikeldurchmesser entsprechendes Druckmeßsignal an die Auswert- und Steueranordnung (27) abgibt.

14. Vorrichtung nach einem der Ansprüche 9 bis 13, dadurch gekennzeichnet, daß ein Überführungsmittel (39) zum Entnehmen einzelner Artikel (2) aus einem Strom aufeinanderfolgender Artikel und zum Transferieren dieser Artikel in die Meßkammer (4) vorgesehen ist.

15. Vorrichtung nach Anspruch 14, dadurch gekennzeichnet, daß das Überführungsmittel (39) einen einer Förderstrecke (36, 38) für einen Artikelstrom zugeordneten Entnahmeförderer (42) mit wenigstens einer einzelne Artikel (2) des Artikelstroms aufgreifenden und in eine Abgabeposition (44a) bewegenden Aufnahme (44) aufweist, daß der Abgabeposition des Entnahmeförderers eine Zwischenablage (43) mit Ausrichtmitteln (47) zum Aufnehmen und Ausrichten eines vom Entnahmeförderer überführten Artikels vor der Meßkammer (4) zugeordnet ist und daß ein Einstoßmittel (48) zum axialen Einstoßen des Artikels aus der Zwischenablage (43) in die Meßkammer (4) vorgesehen ist.

16. Vorrichtung nach einem der Ansprüche 9 bis 15, dadurch gekennzeichnet, daß Mittel (54) zum Rückführen geprüfter Artikel in den Artikelstrom vorgesehen sind.

17. Vorrichtung nach einem der Ansprüche 9 bis 16, dadurch gekennzeichnet, daß mehrere Meßköpfe (1, 52) vorgesehen sind, die nacheinander in einem mit der Zwischenablage (43) fluchtende Einstoßposition bewegbar sind.
